# EUROPÄISCHE PATENTSCHRIFT

(11) **EP 0 426 186 B1**
(45) Veröffentlichungstag und Bekanntmachung des Hinweises auf die Patenterteilung: **20.04.1994**
(21) Anmeldenummer: 90120983.3
(22) Anmeldetag: 02.11.1990
(51) Int. Cl.: F16D 3/205

(54) **Gleichlaufdrehgelenk**
Homokinetic universal joint
Joint universel homocinétique

(30) Priorität: 03.11.1989 DE 3936601
(43) Veröffentlichungstag der Anmeldung: 08.05.1991
(73) Patentinhaber: GKN Automotive AG, D-53797 Lohmar (DE)
(72) Erfinder: Bensinger, Jörg, W-5202 Hennef (DE); Krude, Werner, W-5206 Neunkirchen-Seelscheid (DE); Dieter, Jost, W-5210 Troisdorf (DE)
(74) Vertreter: Neumann, Ernst Dieter, Dipl.-Ing.

(56) Entgegenhaltungen:
- DE-A- 2 831 044
- DE-A- 3 619 728
- DE-C- 3 103 172
- DE-C- 3 716 962
- FR-A- 2 525 306
- FR-A- 2 608 701
- GB-A- 2 226 102
- US-A- 4 747 803

## Beschreibung

Die Erfindung betrifft ein Gleichlaufdrehgelenk in Tripodenbauart mit einem Gelenkaußenteil, in dem umfangsverteilt drei axial verlaufende Längsausnehmungen mit sich jeweils in Umfangsrichtung gegenüberliegenden Laufflächen ausgebildet sind, einem Gelenkinnenteil, an dem umfangsverteilt drei radiale Zapfen in die Längsausnehmungen eingreifend ausgebildet sind, die an ihren Enden fest mit diesen jeweils verbundene Kugelköpfe aufweisen, die jeweils in Innenausnehmungen von Rollenträgern winkelbeweglich eingreifen, und mit einem Rollenkörper auf jedem der Rollenträger, die in den Längsausnehmungen im wesentlichen winkeltreu gehalten sind, wobei die Rollenkörper jeweils drehbar auf einem der Rollenträger gelagert sind.

Einfache Tripodegelenke, bei denen die Rollenkörper koaxial zum jeweiligen Zapfen gelagert sind, haben den Nachteil, daß bei gebeugtem Gelenk die oszillierenden Axialbewegungen der Rollen in den Bahnen nicht als saubere Abwälzbewegung erfolgen, sondern aufgrund der Winkelstellung der Rollen zur Bewegungsrichtung einen Gleitanteil umfassen. Hierdurch entstehen erhebliche Reibungskräfte, die zu axialen Schwingungsanregungen aus dem Gelenk heraus führen. Demgegenüber stellt es eine Verbesserung dar, wenn die Rollenkörper bei gebeugtem Gelenk winkeltreu in rein abwälzender Bewegung in den Längsausnehmungen oszillieren, während die gleitenden Bewegungen der radialen Verlagerung der Rollenkörper auf den Zapfen und der Winkelbewegung der Rollenkörper relativ zum Zapfen sich an von den Längsausnehmungen unabhängigen Flächenpaarungen vollziehen.

Ein Gelenk der eingangs genannten Art ist aus der DE 28 31 044 A1 bekannt. Hierbei greifen die Kugelköpfe jeweils radial unverschieblich in eine kalottenförmige Innenfläche der Rollenträger ein. Die Fertigung dieser Innenflächen ist aufwendig, wenn die Gefahr eines Festgehens vermieden werden soll. Um die Montage auf den Kugelköpfen zu ermöglichen, sind die Rollenträger mit Erweiterungen der Innenausnehmung und die Kugelköpfe mit seitlichen Abflachungen herzustellen. Je nach Drehstellung der Rollenträger auf den Kugelköpfen kommen ungünstige unvollständige Anlage- und Belastungsverhältnisse zustande. Der Drehbewegung der Rollenkörper auf den Rollenträgern werden jeweils bei gebeugt umlaufendem Gelenk Verschiebebewegungen überlagert.

Aus der DE 31 03 172 C 2 und der DE 38 03 340 A 1 ist ein Gelenk bekannt, bei dem Zwischenringe mit einer äußeren Kugelabschnittsfläche auf zylindrischen Zapfen radial verschiebbar sind, die jeweils in eine Kalottenfläche der Rollenträger eingreifen. Auf den Rollenträgern sind die Rollenkörper jeweils in Nadeln gelagert. Hierbei ist die Fertigung sehr aufwendig, da zwei aufeinander gleitende Flächenpaarungen, davon eine als Kugel-Kalotten-Kombination, zu bearbeiten sind.

Aus der DE 36 19 728 A 1 ist ein Tripodegelenk bekannt, bei dem der unmittelbare Kontakt von Teilen des Gelenkinnenteils mit den Bahnen des Gelenkaußenteils durch linear angeordnete Rollenkörper hergestellt wird, die von in radialer Draufsicht im wesentlichen rechteckigen Schwenkköpfen auf den Zapfen gehalten werden.

Ein im wesentlichen gleichartiges Tripodegelenk ist aus der JP-A-59-40016 bekannt. Die Tripodezapfen weisen hierbei Kugelköpfe auf, die in innenzylindrische Ausnehmungen in den Schwenkköpfen radialverschieblich eingreifen. Die Wälzkörper, insbesondere Kugeln, sind in einer Umlaufführung gehalten.

Die Fertigung der Schwenkköpfe ist aufwendig. Es sind komplizierte und empfindliche Verbindungsmittel zwischen Schwenkkopf und Wälzkörpern erforderlich.

Aus der DE 37 16 962 A1 ist ein Gelenk bekannt, bei dem Zwischenringe auf zylindrischen Zapfen mittels Wälzkörpern drehbar gelagert sind, die eine kugelige Außenfläche haben, die jeweils in einer innenzylindrischen Fläche der Rollenkörper winkelbeweglich und radial verlagerbar geführt ist. Drehbewegungen zwischen den Zwischenringen und den Rollenkörpern sollen dagegen hierbei nicht stattfinden.

Der vorliegenden Erfindung liegt die Aufgabe zugrunde, ein Gelenk der eingangs genannten Art bereitzustellen, das bei Wahrung der wesentlichen funktionellen Vorteile und Wirkungen konstruktiv und fertigungstechnisch wesentlich vereinfacht ist. Die Lösung hierfür besteht darin, daß die die Kugelköpfe aufnehmenden Innenausnehmungen der Rollenträger zylindrisch sind und die Kugelköpfe in diesen radial verschiebbar sind. Als Lagerungsmittel kommen hierbei insbesondere Nadellager, wie im Stand der Technik als solches bekannt, in Betracht. Bei im wesentlichen gleichartiger Ausbildung des Rollenkörpers ist der erfindungsgemäße Rollenträger gegenüber dem Rollenträger oder Zwischenring nach dem Stand der Technik vereinfacht, da er keine sphärischen Flächen umfassen muß. Die kugelförmige Anformung an den Zapfen läßt sich beim Herstellen des Tripodesterns mittels Umformtechniken weitgehend vorformen, so daß nur geringe Bearbeitungsmaßnahmen erforderlich werden.

Der wesentliche Vorteil des erfindungsgemäßen Gelenks besteht darin, daß die bevorzugt verwendete Nadellagerung auch bei gebeugtem Gelenk sich senkrecht mit der Mittelachse der Längsausnehmungen kreuzt. Die Abwälzbewegung der Rollenkörper auf dem Rollenträger bleibt damit frei von Störeinflüssen und findet bei idealer Lagerbelastung statt.

Eine festigkeitsmäßig besonders günstige Ausführung besteht darin, daß der Zapfenhals unterhalb des Kugelkopfes an der schwächsten Stelle einen unrunden Querschnitt aufweist, bei dem der Durchmesser in Umfangsrichtung großer als der Durchmesser in der Achsrichtung ist. Die tragende Querschnittsfläche des Zapfens wird damit in vorteilhafter Weise vergrößert, wobei insbesondere der Durchmesser in Richtung der größten Biegebelastung vergrößert ist. In besonders vorteilhafter Weise ist der Zapfenguerschnitt oval, d. h. insbesondere elliptisch, so daß bei Abkippen der auf dem Zapfenkopf gehaltenen Rollenanordnung ein im wesentlichen gleichbleibender Freiraum längs der unteren Innenkante der Rollenanordnung gegenüber der Zapfenoberfläche entsteht. Die in axialer Ansicht seitliche Einschnürung des Zapfenhalses, d. h. die Reduzierung gegenüber dem Kugelkopf muß nur gering sein, da das Schwenken der Rollenkörper bei Drehmomentbelastung gegenüber der Zapfenachse nur relativ gering ist, obwohl ein Freiheitsgrad auch hier vorgesehen sein muß. Die verstärkten Zapfenfüße ermöglichen eine Vergrößerung der Einstecköffnung für die Gelenkwelle im Gelenkinnenteil, so daß die Drehmomentkapazität erhöht wird.

Der Rollenkörper ist in bevorzugter Ausführung auf dem Rollenträger axial gesichert, da die radiale Verlagerung der Rollen bezüglich der Gelenkachse zwischen Rollenträger und Kugelkopf des Zapfens erfolgt.

Für die Außenform der Rollenkörper bieten sich verschiedene als solche bekannte Formen an, denen jeweils die Form der Laufflächen der Längsausnehmungen in geeigneter Weise anzupassen sind.

Hierbei ist insbesondere zu beachten, daß bei gestrecktem Gelenk unter Drehmomentbelastung die Berührungslinie zwischen Zapfen und Rollenträger einerseits und der Berührungslinie an der Rolle gegenüber den Laufflächen andererseits in einer senkrecht auf dem Zapfen stehenden Ebene liegen sollen oder - wenn die Rolle zwei Berührungslinien gegenüber den Laufflächen aufweist - diese symmetrisch zur ersten sein sollen.

Nach einer ersten Möglichkeit sind die Laufflächen der Längsausnehmungen eben und die Rollenkörper im Kontaktbereich mit den Laufflächen zylindrisch ausgebildet. Nach einer Alternative hierzu können die Laufflächen der Längsausnehmungen in Längsrichtung zylindrisch, d.h. im Querschnitt kreisbogenförmig sein und die Rollenkörper im Kontaktbereich mit den Laufflächen kugelig.

Eine Entsprechung der Querschnittsformen von Laufflächen und Rollenkörpern ist aber nicht notwendig. So können beispielsweise kugelige Laufrollen mit im Querschnitt gotischen, d.h. spitzbogenförmigen Laufflächen der Längsausnehmungen kombiniert werden, wodurch ein Schwenken der Laufrollen in den Bahnen, anders als bei den zuvor genannten Formen, verhindert wird. Dies kann jedoch auch durch sich entsprechende dachförmige Querschnittsformen von Laufflächen und Rollenkörpern sichergestellt werden.

In jedem Fall ist es sinnvoll, um eindeutig definierte Bewegungsabläufe sicherzustellen, Radialbewegungen und Winkelbewegungen der Laufrollen bezüglich der Mittelachse des Gelenkaußenteils durch axial verlaufende Anlageschultern längs der Laufflächen in den Längsausnehmungen zumindest an der Öffnungsseite zu verhindern. Derartige axial verlaufende Schultern können unmittelbar mit den Rollenkörpern zusammenwirken und diese winkeltreu im Gelenkaußenteil halten oder mit entsprechenden Gegenflächen an den Rollenträgern zusammenwirken, um diese winkeltreu im Gelenkaußenteil zu halten und aufgrund der axialen Sicherung der Rollenkörpern diesen gegenüber das gleiche an diesen zu bewirken. Durch konvexe Querschnitte der Schultern und/oder der Rollenträger bzw. Rollenkörper im Kontaktbereich kann die Reibung reduziert werden.

Zwei Ausführungsbeispiele, die die Erfindung im Detail zeigen, sind in den Zeichnungen dargestellt.
- Fig. 1: zeigt einen Teilschnitt eines Gelenks durch eine Längsausnehmung und einen Zapfen in einer ersten Ausführung,
- Fig. 2: zeigt einen Teilschnitt eines Gelenks nach Fig. 1 durch eine Längsausnehmung und einen Zapfen in einer zweiten Ausführung mit geändertem Rollenträger,
- Fig. 3: zeigt einen Teilschnitt eines Gelenks nach Fig. 1 durch eine Längsausnehmung und einen Zapfen in einer Ausführung mit geändertem Bahnquerschnitt,
- Fig. 4: zeigt einen Teilschnitt eines Gelenks nach Fig. 3 durch eine Längsausnehmung und einen Zapfen in einer Ausführung mit geänderter Rollenform.
- Fig. 5: zeigt ein erfindungsgemäßes Gelenk in axialer Ansicht;
- Fig. 6: zeigt einen Tripodestern gemäß der Erfindung
a) im Längsschnitt
b) in axialer Ansicht
c) im Tangentialschnitt durch den Zapfenhals.

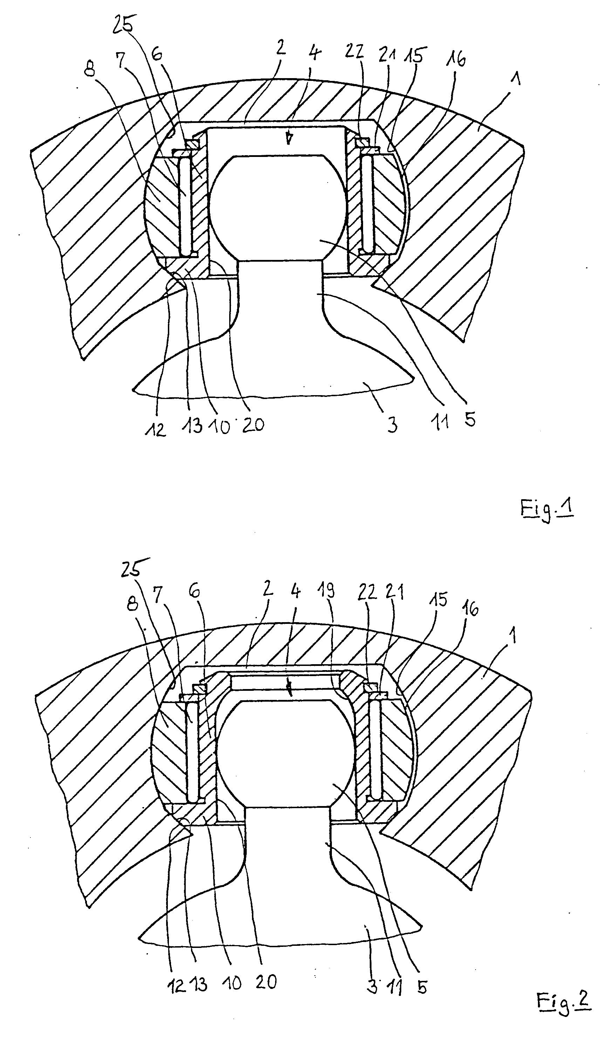

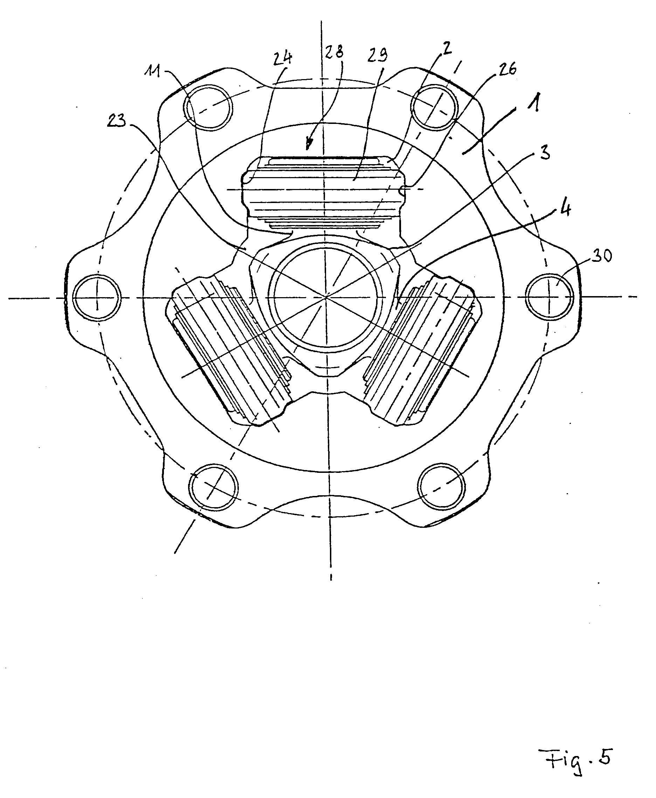

Übereinstimmend ist jeweils in den Figuren 1 bis 4 ein Gelenkaußenteil 1 mit einer Längsausnehmung 2, sowie ein Gelenkinnenteil 3 mit einem daran angesetzten Zapfen 4 erkennbar, der einen Kugelkopf 5 aufweist und mittelbar über einen Rollenträger 6 und eine Nadellagerung 7 einen Rollenkörper 8, 9 trägt. Nadellager und Rollenkörper sind gegenüber dem Rollenträger 6 einerseits durch einen integralen Ansatz 10 und andererseits durch eine Scheibe 21 und einen Sicherungsring 22 gehalten. Am Ansatz 10 ist eine Anschlagfläche 12 ausgebildet, die auf eingezogenen Schulterbereichen 13, 14 der Längsausnehmung 2 zur axialen Sicherung aufliegt. In den Figuren 1 bis 3 sind die Schultern 13 ebene Flächen, wogegen in Fig. 4 die Schultern 14 im Querschnitt ballig sind.

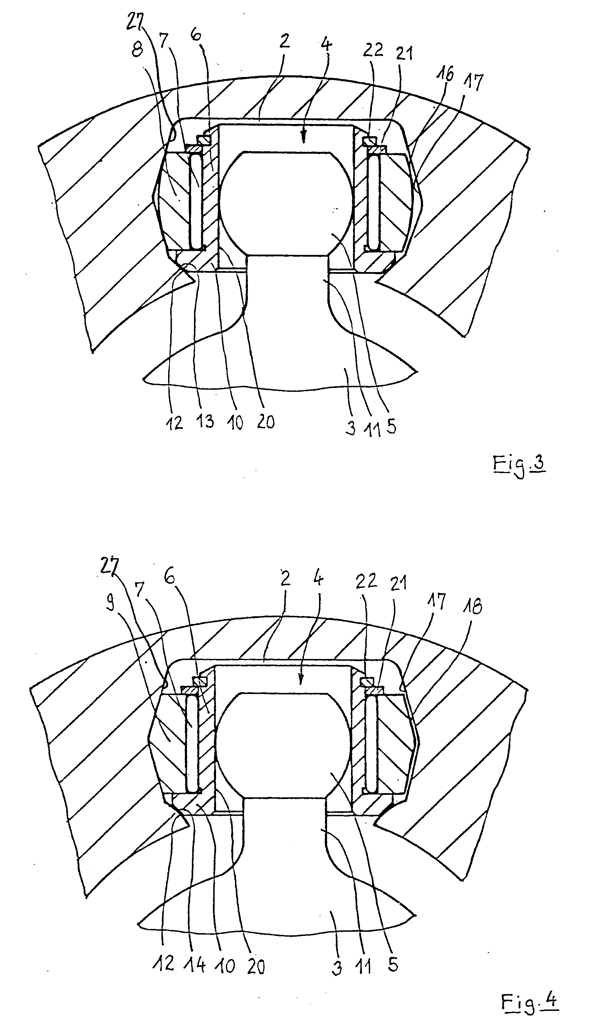

In der Figuren 1 bis 4 hat der Rollenträger 6 eine zylindrische Innenfläche 20, in der der Kugelkopf 5 abwinkelbar und radial verlagerbar gehalten ist. In den Figuren 1 und 2 wirken einander gegenüberliegende zylindrische Laufflächen 15, 25 der Längsausnehmung 2 mit einer kugeligen Außenfläche 16 des Rollenkörpers 8 zusammen und sind bei Drehmomentübertragung mit einer der Laufflächen in Anlage. In den Figuren 3 und 4 sind jeweils dachförmige Laufflächen 17, 27 vorgesehen, wobei in Figur 3 darin ein Rollenkörper 8 mit einer kugeligen Außenfläche 16 abrollt, wogegen in Figur 4 ein Rollenkörper 9 mit einer angepaßten doppelkonischen Außenfläche 18 zu erkennen ist. In den Figuren ist eine Drehmomentübertragung vom Gelenkaußenteil auf das Gelenkinnenteil im Uhrzeigersinn dargestellt. Während in den Figuren 1, 3 und 4 die Innenfläche 20 des Rollenträgers 6 durchgehend zylindrisch ist, ist sie in Figur 2 im radial äußeren Bereich um eine innenkuglige Anschlagsfläche 19 ergänzt.

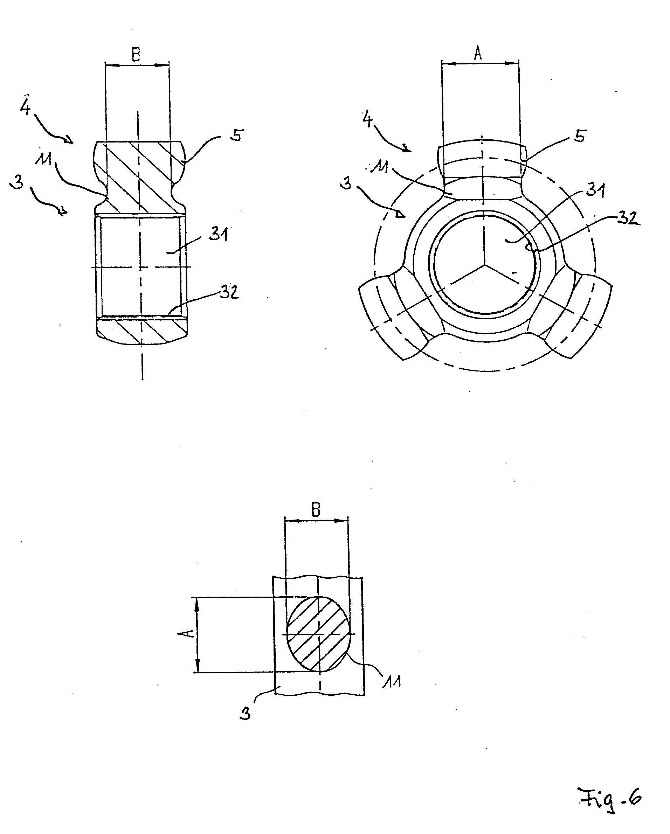

In Figur 5 ist ein erfindungsgemäßes Gelenkaußenteil 1 mit drei jeweils um 120° umfangsversetzt angeordneten Längsausnehmungen 2, die über einen zentralen Gelenkinnenraum 23 miteinander verbunden sind, erkennbar. Das Gelenkaußenteil hat Anschlußgewindelöcher 30 zur Verbindung mit einem Wellenflansch. In jeder der Längsausnehmungen sind sich in Umfangsrichtung gegenüberliegende Bahnen 24, 26 ausgebildet, die in der dargestellten Ausführung eine leicht konvexe Oberfläche haben, ohne daß dies für den Gegenstand der Erfindung von Bedeutung ist. Im Gelenkaußenteil 1 ist ein Gelenkinnenteil 3 in Form eines Tripodesterns eingeführt, der umfangsverteilt in die Längsausnehmungen 2 des Gelenkaußenteils 1 eingreifende Zapfen 4 aufweist, auf denen jeweils Rollenanordnungen 28, die gegenüber den Zapfen schwenkbar und radial verschiebbar sind, angeordnet sind. Die Rollenanordnungen umfassen neben weiteren Einzelheiten Außenrollen 29, die unmittelbar in Kontakt mit den Bahnen 24, 26 stehen und eine im Querschnitt leicht konkave Rollenoberfläche aufweisen, ohne daß dies für den Gegenstand der Erfindung von Bedeutung ist.

In Figur 6 ist ein erfindungsgemäßes Gelenkinnenteil in Form eines Tripodesterns dargestellt, der im Axialschnitt und in axialer Ansicht die Innenbohrung 31 mit einer Keilverzahnung 32 erkennen läßt und wobei die Zapfen 4 einen Kugelkopf 5 mit gegenüber dem Zapfenhals 11 vergrößertem Durchmesser haben. Wie insbesondere in der Einzelheit, die einen Zapfenquerschnitt darstellt erkennbar, ist der Durchmesser A des Zapfenhalses 11 in Umfangsrichtung gegenüber dem Durchmesser B in Axialrichtung deutlich vergrößert, so daß der Querschnitt des Zapfenhalses 11 die Form einer Ellipse aufweist.

### Bezugszeichenliste

- 1: Gelenkaußenteil
- 2: Längsausnehmung
- 3: Gelenkinnenteil
- 4: Zapfen
- 5: Kugelkopf
- 6: Rollenträger
- 7: Nadellager
- 8: Rollenkörper (kugelig)
- 9: Rollenkörper (doppelkonisch)
- 10: Ansatz
- 11: Zapfenhals
- 12: Anschlagfläche
- 13: Schulter (eben)
- 14: Schulter (ballig)
- 15: Lauffläche (zylindrisch)
- 16: Rollenfläche (kugelig)
- 17: Lauffläche (dachförmig)
- 18: Rollenfläche (doppelkonisch)
- 19: Anschlagfläche
- 20: Innenfläche (zylindrisch)
- 21: Scheibe
- 22: Sicherungsring
- 23: Gelenkinnenraum
- 24: Lauffläche (ballig)
- 25: Lauffläche (zylindrisch)
- 26: Lauffläche (ballig)
- 27: Lauffläche (dachförmig)
- 28: Rollenanordnung
- 29: Außenrolle
- 30: Anschlußgewindelöcher
- 31: Innenbohrung
- 32: Keilverzahnung

## Patentansprüche

1. Gleichlaufdrehgelenk in Tripodenbauart mit einem Gelenkaußenteil (1), in dem umfangsverteilt drei axial verlaufende Längsausnehmungen (2) mit sich jeweils in Umfangsrichtung gegenüberliegenden Laufflächen (15) ausgebildet sind, einem Gelenkinnenteil (3), an dem umfangsverteilt drei radiale Zapfen (4) in die Längsausnehmungen (2) eingreifend ausgebildet sind, die an ihren Enden fest mit diesen jeweils verbundene Kugelköpfe (5) aufweisen, die jeweils in Innenausnehmungen (20) von Rollenträgern (6) winkelbeweglich eingreifen, und mit einem Rollenkörper (8, 9) auf jedem der Rollenträger (6), die in den Längsausnehmungen (2) im wesentlichen winkeltreu gehalten sind, wobei die Rollenkörper (8, 9) jeweils drehbar auf einem der Rollenträger (6) gelagert sind,
dadurch gekennzeichnet,
daß die die Kugelköpfe (5) aufnehmenden Innenausnehmungen (20) der Rollenträger (6) zylindrisch sind und die Kugelköpfe (5) in diesen radial verschiebbar sind.

2. Gelenk nach Anspruch 1,
dadurch gekennzeichnet,
daß der Zapfenhals (24) unterhalb des Kugelkopfes (5) an der schwächsten Stelle einen unrunden Querschnitt aufweist, bei dem der Durchmesser in Umfangsrichtung größer als der Durchmesser in der Achsrichtung ist.

3. Gelenk nach Anspruch 1,
dadurch gekennzeichnet,
daß der Querschnitt des Zapfenhalses (24) oval ist.

4. Gelenk nach einem der Ansprüche 1 bis 3,
dadurch gekennzeichnet,
daß der Durchmesser des Zapfenhalses (24) in Axialrichtung nur soweit reduziert ist, daß bei maximaler vorgesehener Gelenkbeugung nur geringes Spiel zwischen der Oberfläche des Zapfenhalses und der inneren Unterkante des Rollenträgers frei bleibt.

5. Gelenk nach einem der Ansprüche 1 bis 4,
dadurch gekennzeichnet,
daß der Durchmesser des Zapfenhalses (24) in Umfangsrichtung nur soweit reduziert ist, daß bei Schiefstellung des Tripodesterns gegenüber den Symmetrieebenen zwischen den Rollenbahnpaaren nur ein geringer Freiraum zwischen der Oberfläche des Zapfenhalses und der inneren Unterkante des Rollenträgers freibleibt.

6. Gelenk nach einem der Ansprüche 1 bis 5,
dadurch gekennzeichnet,
daß bei gestrecktem Gelenk die Kontaktlinien zwischen Kugelkopf und Rollenträger einerseits und zwischen Rollenkörper und Bahn andererseits in einer Ebene bzw. symmetrisch zu einer Ebene liegen.

7. Gelenk nach einem der Ansprüche 1 bis 6,
dadurch gekennzeichnet,
daß jeweils Nadellager (7) zwischen Rollenträger (6) und Rollenkörper (8, 9) vorgesehen sind.

8. Gelenk nach einem der Ansprüche 1 bis 7,
dadurch gekennzeichnet,
daß die Rollenkörper (8, 9) jeweils auf den Rollenträgern (6) axial gesichert sind.

9. Gelenk nach einem der Ansprüche 1 bis 8,
dadurch gekennzeichnet,
daß die Laufflächen der Längsausnehmungen (2) eben und die Rollenkörper im Kontaktbereich mit den Laufflächen zylindrisch sind.

10. Gelenk nach einem der Ansprüche 1 bis 8,
dadurch gekennzeichnet,
daß die Laufflächen (15) der Längsausnehmungen (2) in Längsrichtung zylindrisch, d.h. im Querschnitt kreisbogenförmig sind und die Rollenkörper (8) im Kontaktbereich mit den Laufflächen (15) kugelig sind.

11. Gelenk nach einem der Ansprüche 1 bis 8,
dadurch gekennzeichnet,
daß die Laufflächen der Längsausnehmungen (2) im Querschnitt spitzbogenförmig sind und die Rollenkörper im Kontaktbereich mit den Laufflächen kugelig oder tonnenförmig sind.

12. Gelenk nach einem der Ansprüche 1 bis 8,
dadurch gekennzeichnet,
daß die Laufflächen (17) der Längsausnehmungen (2) im Querschnitt dachförmig sind und die Rollenkörper (9) im Kontaktbereich mit den Laufflächen (17) kugelig oder tonnenförmig oder dachförmig sind.

13. Gelenk nach einem der Ansprüche 1 bis 12,
dadurch gekennzeichnet,
daß axial verlaufende Schultern (13, 14) längs der Laufflächen (15, 17) in den Längsausnehmungen (2) vorgesehen sind, die mit den Rollenträgern (6) oder den Rollenkörpern (8, 9) zusammenwirken und diese winkeltreu im Gelenkaußenteil (1) halten.

14. Gelenk nach Anspruch 13,
dadurch gekennzeichnet,
daß die Schultern (14) im Querschnitt konvex und/oder die Rollenträger (6) bzw. die Rollenkörper (8, 9) im Kontaktbereich mit diesen zur Reduzierung der Reibung ballig ausgeführt sind.

## Claims

1. A constant velocity universal joint of the tripode type having an outer joint part (1) provided with three circumferentially distributed, axially extending longitudinal recesses (2) each comprising circumferentially opposed running faces (15); an inner joint part (3) provided with three circumferentially distributed radial arms (4) which engage the longitudinal recesses (2) and whose ends each comprise a ball head (5) firmly connected thereto and engaging inner recesses (20) of roller carriers (6) in an angularly movable way; and having a roller member (8, 9) on each of the roller carriers (6) which are held in the longitudinal recesses (2) at a substantially constant angle, the roller members (8, 9) each being rotatably supported on one of the roller carriers (6),
characterised in
that the inner recesses (20) of the roller carriers (6) accommodating the ball heads (5) are cylindrical and that the ball heads (5) are radially movable therein.

2. A joint according to claim 1,
characterised in
that the necked arm portion (24) below the ball head (5), in the weakest region, comprises a non-circular cross-section in the case of which the diameter in the circumferential direction is greater than the diameter in the axial direction.

3. A joint according to claim 1,
characterised in
that the cross-section of the necked arm portion (24) is oval.

4. A joint according to any one of claims 1 to 3,
characterised in
that the diameter of the necked arm portion (24) in the axial direction is reduced only to the extent that, when the joint is articulated by the maximum amount provided for, there remains only a small amount of play between the surface of the necked arm portion and the inner lower edge of the roller carrier.

5. A joint according to any one of claims 1 to 4,
characterised in
that the diameter of the necked arm portion (24) in the circumferential direction is reduced only to the extent that, if the tripode is angled relative to the planes of symmetry between the pairs of roller tracks, there remains only a small amount of play between the surface of the necked arm portion and the inner lower edge of the roller carrier.

6. A joint according to any one of claims 1 to 5,
characterised in
that, when the joint is in the extended condition, the lines of contact between the ball head and roller carrier on the one hand and between the roller member and track on the other hand are positioned in one plane or symmetrically relative to a plane.

7. A joint according to any one of claims 1 to 6,
characterised in that
between the roller carriers (6) and the roller members (8, 9) there are provided needle bearings (7).

8. A joint according to any one of claims 1 to 7,
characterised in
that the roller members (8, 9) are axially secured on the roller carriers (6).

9. A joint according to any one of claims 1 to 8,
characterised in
that the running faces of the longitudinal recesses (2) are planar and that the roller members in the region of contact with the running faces are cylindrical.

10. A joint according to any one of claims 1 to 8,
characterised in
that in the longitudinal direction, the running faces (15) of the longitudinal recesses (2) are cylindrical, i.e. they are circular-arch-shaped in their cross-section and that the roller members (8) in the region of contact with the running faces (15) are spherical.

11. A joint according to any one of claims 1 to 8,
characterised in
that, in their cross-section, the running faces of the longitudinal recesses (2) have the shape of a pointed arch and that the roller members in the region of contact with the running faces are spherical or barrel-shaped.

12. A joint according to any one of claims 1 to 8,
characterised in
that, in their cross-section, the running faces (17) of the longitudinal recesses (2) are roof-shaped and that the roller members (9) in the region of contact with the running faces (17) are spherical or barrel-shaped or roof-shaped.

13. A joint according to any one of claims 1 to 12,
characterized in
that along the running faces (15, 17) in the longitudinal recesses (2), there are provided axially extending shoulders (13, 14) which cooperate with the roller carriers (6) or the roller members (8, 9) while holding same at a constant angle in the outer joint part (1).

14. A joint according to claim 13,
characterized in
that in their cross-section, the shoulders (14) are convex and/or that the roller carriers (6) and roller members (8, 9), in the region of contact with said shoulders, are spherical in order to reduce friction.

## Revendications

1. Joint homocinétique du type tripode comprenant une partie extérieure de joint (1), dans laquelle sont ménagés trois évidements longitudinaux (2) qui s'étendent axialement et sont répartis à la périphérie et qui présentent chacun des surfaces de roulement (15) en vis-à-vis dans la direction périphérique, une partie intérieure de joint (3), sur laquelle sont réalisées trois broches radiales (4) réparties à la périphérie et engagées dans les évidements longitudinaux (2), lesdites broches comportant chacune à leurs extrémités des têtes sphériques (5) qui leur sont raccordées solidairement, ces têtes sphériques s'engageant respectivement avec faculté de se déplacer angulairement dans des évidements intérieurs (20) de porte-galets (6), et le joint comprenant en outre un corps de galet (8, 9) sur chacun des porte-galets (6), ces corps de galet étant retenus sensiblement sous un angle constant dans les évidements longitudinaux (2), les corps de galet (8, 9) étant montés respectivement en rotation sur l'un des porte-galets (6),
caractérisé en ce que
les évidements intérieurs (20) des porte-galets (6) qui reçoivent les têtes sphériques (5) sont cylindriques, et en ce que les têtes sphériques (5) sont susceptibles de se déplacer radialement dans ces évidements intérieurs.

2. Joint selon la revendication 1, caractérisé en ce que le col de broche (24) au-dessous de la tête sphérique (5) présente à l'emplacement le plus fragile une coupe transversale qui n'est pas circulaire, dans laquelle le diamètre dans la direction périphérique est supérieur au diamètre axial.

3. Joint selon la revendication 1, caractérisé en ce que la section du col de broche (24) est ovale.

4. Joint selon l'une quelconque des revendications 1 à 3, caractérisé en ce que le diamètre du col de broche (24) en direction axiale est réduit dans la mesure juste nécessaire afin que, pour la flexion maximale prévue pour le joint, il reste uniquement un faible jeu libre entre la surface du col de broche et la bordure inférieure intérieure du porte-galets.

5. Joint selon l'une quelconque des revendications 1 à 4, caractérisé en ce que le diamètre du col de broche (24) dans la direction périphérique est réduit dans la mesure juste nécessaire afin que, pour un positionnement en oblique de l'étoile tripode par rapport aux plans de symétrie entre les paires de pistes de roulement, il reste seulement un faible espace libre entre la surface du col de broche et la bordure inférieure intérieure du porte-galets.

6. Joint selon l'une quelconque des revendications 1 à 5 caractérisé en ce que lorsque le joint est en alignement, les liées de contact entre la tête sphérique et le porte-galets d'une part, et entre le corps de galet et la piste d'autre part sont situées dans un plan, ou symétriquement par rapport à un plan.

7. Joint selon l'une quelconque des revendications 1 à 6, caractérisé en ce que des paliers à aiguilles (7) sont prévus respectivement entre les porte-galets (6) et les corps de galet (8, 9).

8. Joint selon l'une quelconque des revendications 1 à 7, caractérisé en ce que les corps de galet (8, 9) sont fixés axialement respectivement sur les porte-galets (6).

9. Joint selon l'une quelconque des revendications 1 à 8, caractérisé en ce que les surfaces de roulement des évidements longitudianux (2) sont planes, et en ce que les corps de galet sont cylindriques dans la région de contact avec les surfaces de roulement.

10. Joint selon l'une quelconque des revendications 1 à 8, caractérisé en ce que les surfaces de roulement (15) des évidements longitudinaux (2) sont cylindriques dans la direction longitudinale, c'est-à-dire qu'ils ont en section transversale une forme en arc de cercle, et en ce que les corps de galet (8) sont sphériques dans la région de contact avec les surfaces de roulement (15).

11. Joint selon l'une quelconque des revendications 1 à 8, caractérisé en ce que les surfaces de roulement des évidements longitudinaux (2) ont en coupe transversale une forme en ogive, et en ce que les corps de galet sont sphériques, ou en forme de tonneau, dans la région de contact avec les surfaces de roulement.

12. Joint selon l'une quelconque des revendications 1 à 8, caractérisé en ce que les surfaces de roulement (17) des évidements longitudinaux (2) ont en coupe transversale une forme de toit, et en ce que les corps de galet (9) sont sphériques, en forme de tonneau ou en forme de toit, dans la région de contact avec les surfaces de roulement (17).

13. Joint selon l'une quelconque des revendications 1 à 12, caractérisé en ce que des épaulements axiaux (13, 14) sont prévus le long des surfaces de roulement (15, 17) dans les évidements longitudinaux (2), qui coopèrent avec les porte-galets (6) ou les corps de galet (8, 9), et maintiennent ceux-ci sous un angle constant dans la partie extérieure de joint (1).

14. Joint selon la revendication 13, caractérisé en ce que les épaulements (14) sont convexes en section transversale, et/ou en ce que les porte-galets (6) ou les corps de galet (8, 9) sont bombés dans la région de contact avec ces épaulements afin de réduire la friction.
